Europäisches Patentamt

European Patent Office

Office européen des brevets

(19)

(11) Veröffentlichungsnummer : **0 096 880**
**B1**

(12) **EUROPÄISCHE PATENTSCHRIFT**

(45) Veröffentlichungstag der Patentschrift :
10.09.86

(51) Int. Cl.⁴ : **F 02 K   1/76**

(21) Anmeldenummer : **83105753.4**

(22) Anmeldetag : **11.06.83**

(54) Steuereinrichtung für Schubumkehrvorrichtungen.

(30) Priorität : 16.06.82 DE 3222674

(43) Veröffentlichungstag der Anmeldung :
28.12.83 Patentblatt 83/52

(45) Bekanntmachung des Hinweises auf die Patenterteilung : 10.09.86 Patentblatt 86/37

(84) Benannte Vertragsstaaten :
DE FR GB IT SE

(56) Entgegenhaltungen :
FR-A- 2 222 539
US-A- 2 706 886
US-A- 3 033 219
US-A- 3 132 565
US-A- 3 296 936

(73) Patentinhaber : MTU MOTOREN- UND TURBINEN-
UNION MÜNCHEN GMBH
Dachauer Strasse 665 Postfach 50 06 40
D-8000 München 50 (DE)

(72) Erfinder : Greune, Christian, Ing. (grad.)
Maisacher Strasse 55
D-8080 Fürstenfeldbruck (DE)
Erfinder : Holzhauer, Hilbert
Wiesenweg 12
D-8061 Stetten (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

EP 0 096 880 B1

**Bechreibung**

Die Erfindung bezieht sich auf eine Einrichtung gemäß dem Oberbegriff des Anspruchs 1.

Bei der durch die DE-A-24 13 702 bekannten Einrichtung dieser Art, aber als Einzeleinrichtung, d. h. für einen Schubumkehrer eines Düsentriebwerks, geht es um die Erleichterung der Entriegelung einer Verriegelungseinrichtung für den Schubumkehrer für das Ausfahren desselben.

Gemäß der vorliegenden Erfindung jedoch wird von einer Einrichtung mit jeweils einem Stellmotor, jeweils einem Ventil usw. ausgegangen — für jedes der beiden Düsentriebwerke ist also jeweils eine Einzeleinrichtung vorgesehen —, und die Problematik ist die, daß die beiden Schubumkehrer im allgemeinen unterschiedlich schnell ausfahren, insbesondere durch unterschiedliche Luftlecke an den beiden Eingangskolben, unterschiedliche Reibungen in den beiden Differentialgetrieben und in Lagern und biegsamen Klappentriebswellen der beiden Einzeleinrichtungen und unterschiedliche Werte des Luft-Lieferdrucks für die beiden Einzeleinrichtungen. Jene unterschiedlichen Luftlecke üben diesbezüglich einen sehr großen Einfluß aus, wegen der kleinen Arbeitsvolumen in den Zylindern für die Eingangskolben. Bei jenen Lagern handelt es sich insbesondere um Lager der Differentialgetriebe, der Kolbenstagen der Eingangskolben und von Hebeln an den Differentialgetrieben.

Aufgabe der Erfindung ist es, den Unterschied der Ausfahrgeschwindigkeiten der beiden Schubumkehrer möglichst gering zu machen oder praktisch zum Verschwinden zu bringen.

Diese Aufgabe wird erfindungsgemäß durch den kennzeichnenden Teil des Anspruchs 1 gelöst.

Durch diese Erfindung, bei der zwischen den beiden Schubumkehrern bzw. den Einzeleinrichtungen eine Synchronisationsverbindung für das Ausfahren hergestellt wird, wird erreicht, daß das Ausfahren der beiden Schubumkehrer gut synchronisiert wird bzw. fast oder praktisch gleichmäßig erfolgt und die beiden Schubumkehrer ihre Ausfahrendstellungen mit äußerst kleinem gegenseitigem Zeitunterschied erreichen. Das Synchronisieren kann zuverlässig erfolgen. Die Ausfahrsynchronisationseinrichtung kann durch zuverlässige und relativ einfache Teile gebildet werden. Für das Einfahren der Schubumkehrer wird die Synchronisationsverbindung aufgehoben.

Vorteilhafte Ausbildungen der Erfindung sind in den Unteransprüchen aufgeführt.

So ist die Ausbildung gemäß Anspruch 2 sehr zu empfehlen.

Diese und die elektrische Ausbildung gemäß Anspruch 3, bei denen an den Eingängen der Verstelleinrichtung gemessen wird, sind einfach und zuverlässig und synchronisieren gut. Zusätzlicher Aufwand ist gemäß Anspruch 4 notwendig, jedoch ist die Synchronisation noch besser. Auch die mechanische Ausbildung gemäß Anspruch 5 oder 10 und die Ausbildung gemäß Anspruch 6, bei denen an den Ausgängen der Verstelleinrichtung gemessen wird, sind zuverlässig und relativ einfach und synchronisieren gut. Wenig aufwendig, zuverlässig und gut synchronisierend ist auch Anspruch 7. Im Fall des Anspruchs 8 ist der Aufwand größer, da an den Eingängen und den Ausgängen der Verstelleinrichtung gemessen wird, jedoch ist auch hier die Synchronisation noch besser. Anspruch 9 zeigt, wie im allgemeinen vorgegangen wird, um die genannte synchronisierende Beeinflussung auf leichte Weise zu erreichen. Wie Anspruch 11 besagt, sind genannte Wegaufnehmer — siehe die Ansprüche 2, 7 und 8 — insbesondere induktive Drehaufnehmer. Dies trägt zur Einfachheit der Synchronisationseinrichtung bei, und außerdem sind auch induktive Drehaufnehmer sehr zuverlässig. Anspruch 12 enthält eine gute Möglichkeit der baulichen Ausführung für die Messung der Stellwege der Eingangskolben. Zum Anspruch 13 wird auf folgendes hingewiesen : Zur Messung an den Ausgängen der Verstelleinrichtung ist es wegen des im allgemeinen begrenzten Gesamtstellwegs des Wegaufnehmers vorteilhaft, am Rückführgetriebe ansetzen, da das Rückführgetriebe im allgemeinen untersetzt. Die Zählvorrichtung gemäß Anspruch 14 zählt die ausgangsseitigen Umdrehungen sehr genau, was zu einer guten Synchronisation beiträgt.

Im allgemeinen weist die Verstelleinrichtung Mittel auf, durch die im Fall einer Störung oder eines Versagens eines der Düsentriebwerke oder Schubumkehr-Systeme die zwischen den Schubumkehr-Systemen bestehende Synchronisationsverbindung aufgehoben wird, weil sonst das fehlerhafte, inaktive Schubumkehr-System das nicht fehlerhafte Schubumkehr-System blockieren würde. Es werden zum Aufheben der Synchronisationsverbindung im allgemeinen die Verriegelungsschalter für die eingefahrenen Schubumkehrer verwendet.

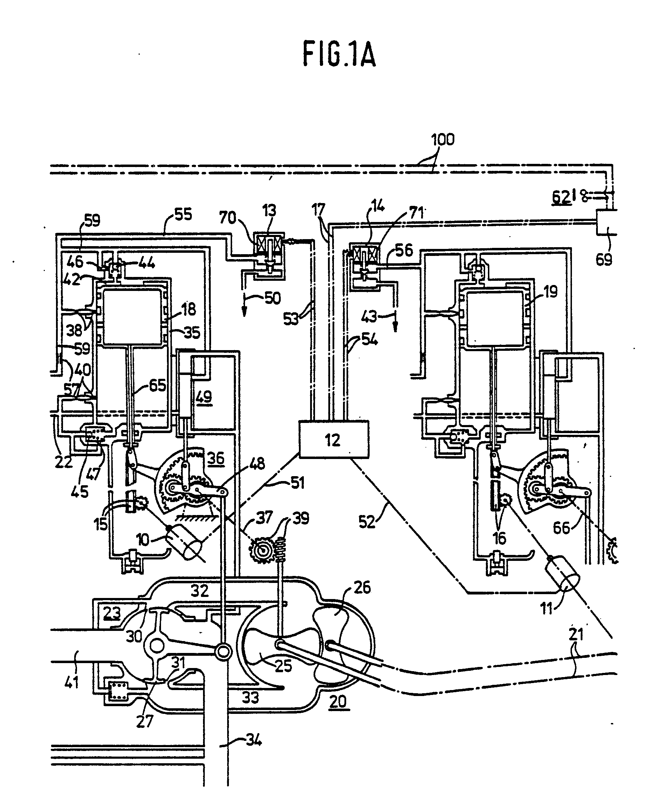

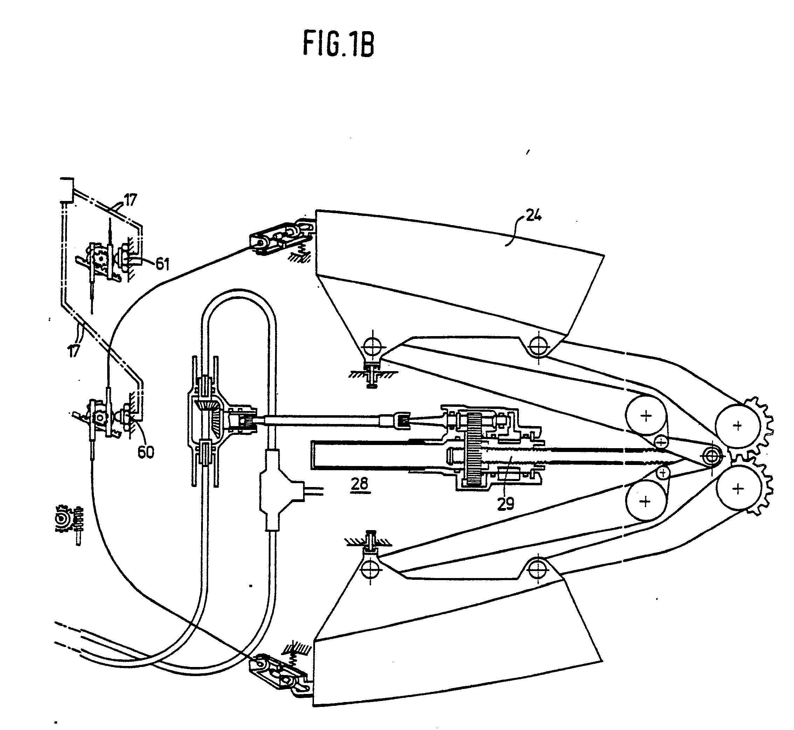

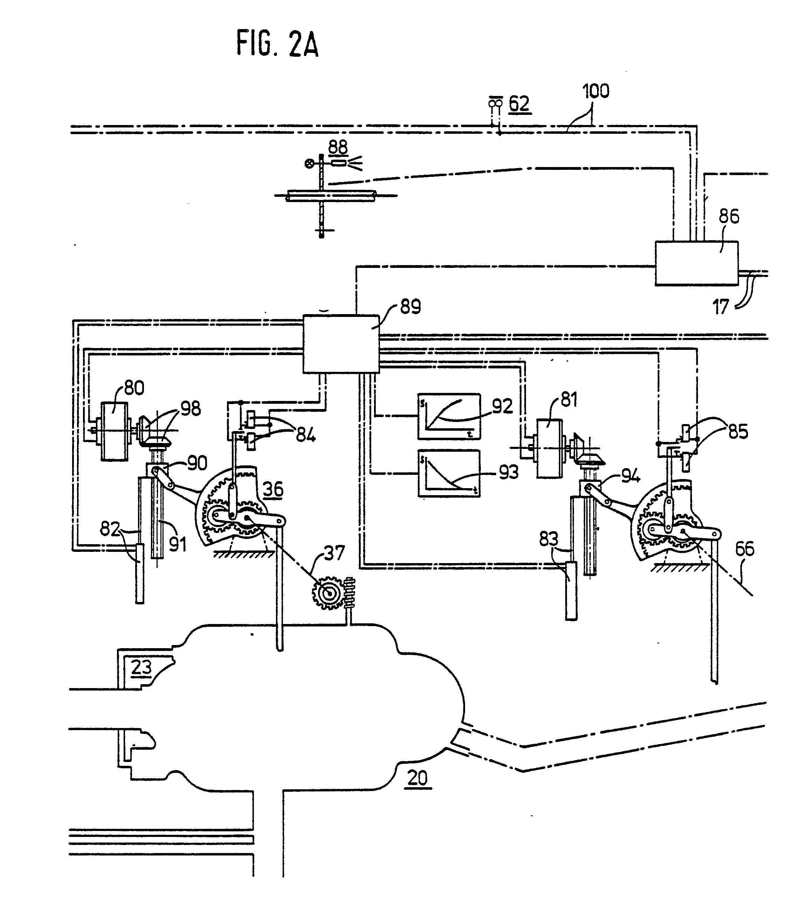

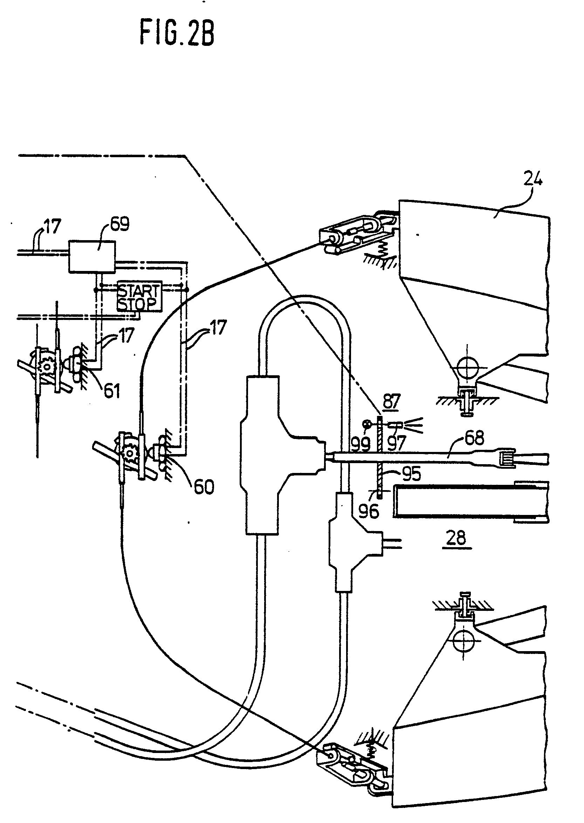

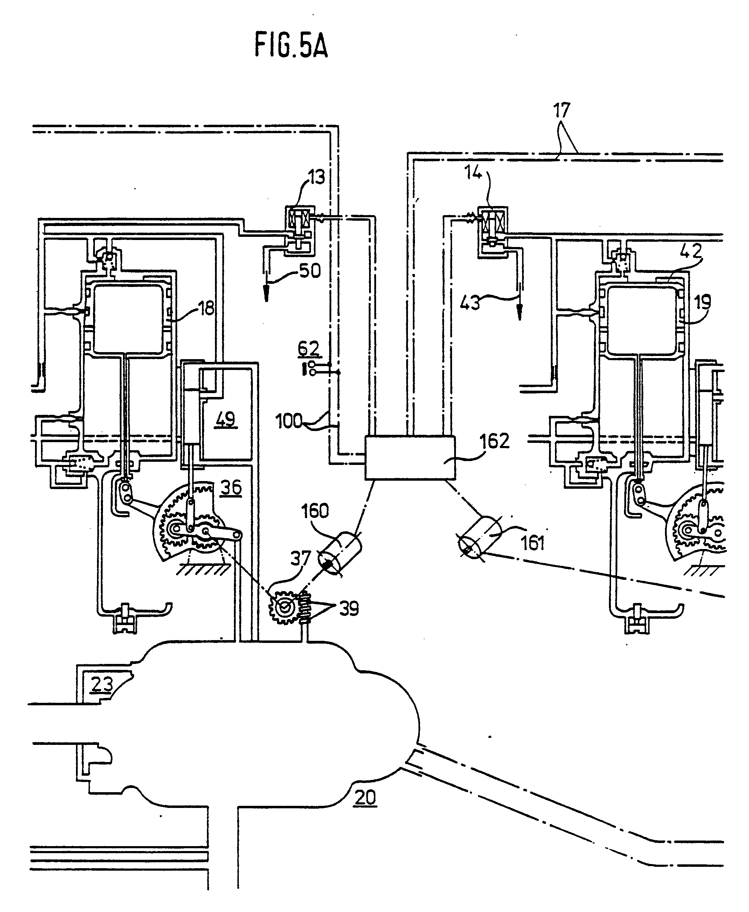

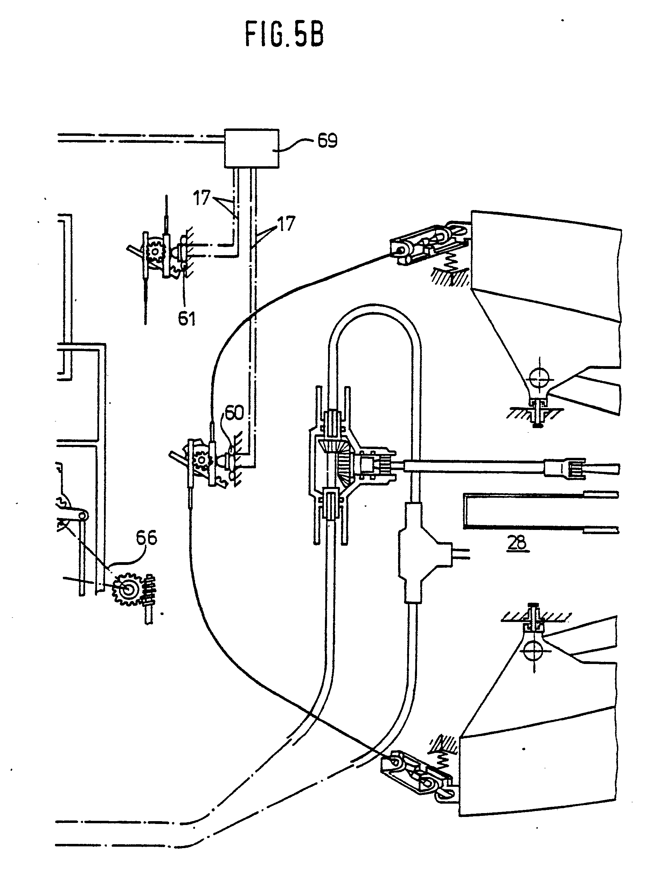

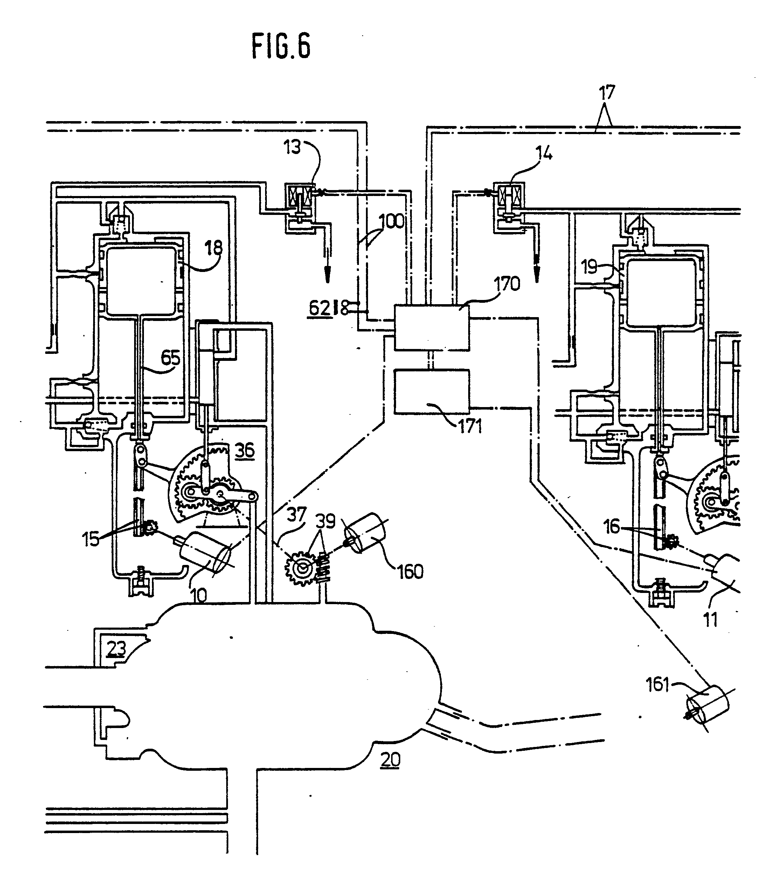

In der Zeichnung sind in Fig. 1 bis 6 sechs Ausführungsbeispiele der erfindungsgemäßen Verstelleinrichtung schematisch dargestellt. In allen Figuren sind zur Vereinfachung die Verstelleinrichtungen links abgebrochen dargestellt. Das dort Weggelassene ist jeweils das Gleiche und besteht im wesentlichen — siehe auch später — je Einzeleinrichtung aus einem Absperrventil, einem Richtungswählventil und einem Folgeventil und zugehörigen Luft- bzw. Druckluftleitungen. Zur Vermeidung von Wiederholungen sind die Verstelleinrichtungen gemäß Fig. 2 bis 5 rechts abgebrochen dargestellt, wobei das weggelassene rechte Ende mit dem rechten Ende von Fig. 1 identisch ist, und die Verstelleinrichtung gemäß Fig. 6 rechts abgebrochen dargestellt, wobei der weggelassene rechte Teil mit dem rechten Teil von Fig. 5 identisch ist. — In Fig. 1 bis 6 sind sämtliche elektrischen Verbindungen bzw. Leitungen und ferner auch Wellenvereinfachungen und einige Mittellinien strichpunktiert dargestellt.

Gemäß Fig. 1 bis 6 weist diese Einrichtung zum Verstellen der Schubumkehrer bzw. von jeweils zwei Klappen (Schubumkehrklappen) 24 derselben zwei gleiche, durch Druckluft betriebene Drehkolben- bzw. Luftmotoren 20 auf. Diese weisen jeweils zwei Drehkörper 25 und 26 auf, deren Drehrichtungen gemeinsam umkehrbar sind. Es ist der Einfachheit halber nur einer der beiden Luftmotoren 20 dargestellt. Jeder Luftmotor 20 betätigt seinen Schubumkehrer, und zwar sind durch die Drehkörper 25, 26 über eine biegsame Welle 21 und eine Übertragungseinrichtung 28 die Klappen 24 je nach Drehrichtung der Drehkörper 25, 26 aus- und einfahrbar. Die Klappen 24 sind voll eingefahren dargestellt. Die axialen Wege zweier gleicher, miteinander parallelarbeitender Kugelrollspindeln 29 (nur eine ist dargestellt) der Übertragungseinrichtungen 28 sind jeweils von dem Stell- bzw. Drehweg bzw. der Anzahl der Umdrehungen der Drehkörper 25, 26 linear abhängig ; jeder Stelle dieses Wegs bzw. jeder Umdrehungsanzahl ist eine bestimmte Stellung bzw. Winkellage der Klappen 24 zugeordnet. Die Verstelleinrichtung weist ferner je Luftmotor 20 ein Drehschieberventil 23 zur Steuerung der Druckluft für ihn auf. Beide Drehschieberventile 23 sind gleich. Der Luftmotor 20 und das Drehschieberventil 23 bilden zusammen mit zwei sie verbindenden Kanälen 32 und 33 eine bauliche Einheit. Die Druckluft ist dem Drehschieberventil 23 von einem Kompressor des zugehörigen Düsentriebwerks über eine Zuströmleitung 41, die das genannte, nicht dargestellte Absperrventil aufweist, zuführbar. Durch einen Drehschieber 27 sind zwei gleich große, sich diametral gegenüberliegende Ventildurchflußquerschnitte 30 und 31 steuerbar, und je nach Öffnungsdrehtung des Drehschiebers 27 sind durch die Druckluft die Drehkörper 25, 26 in ihrer einen oder ihrer entgegengesetzten Drehrichtung antreibbar. Die Austrittsluft strömt durch eine Abströmleitung 34 hindurch hindurch ab.

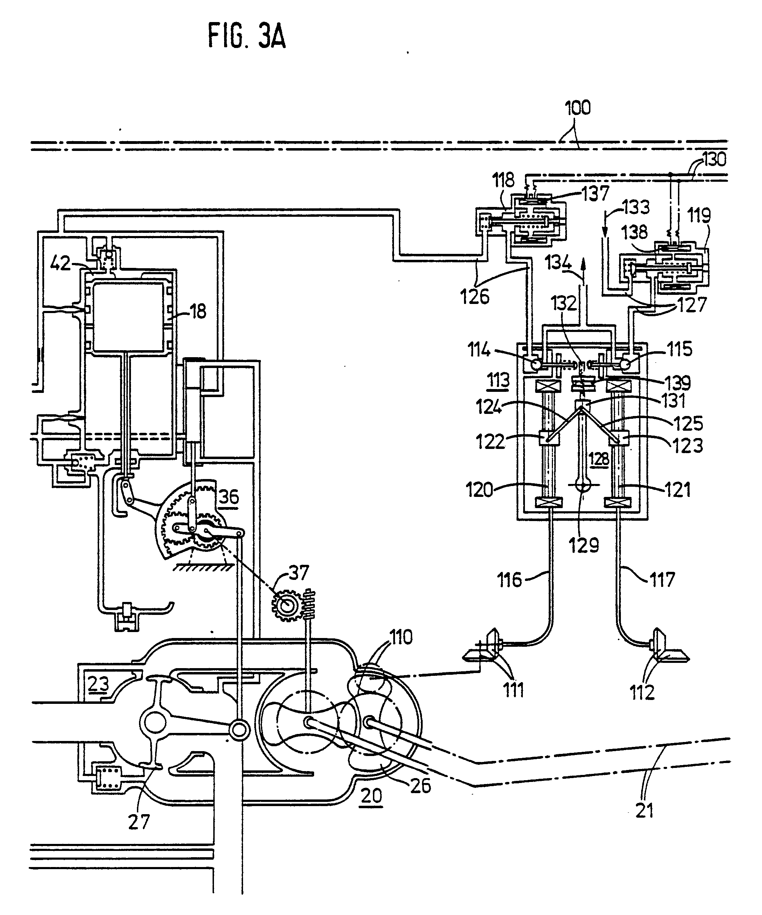

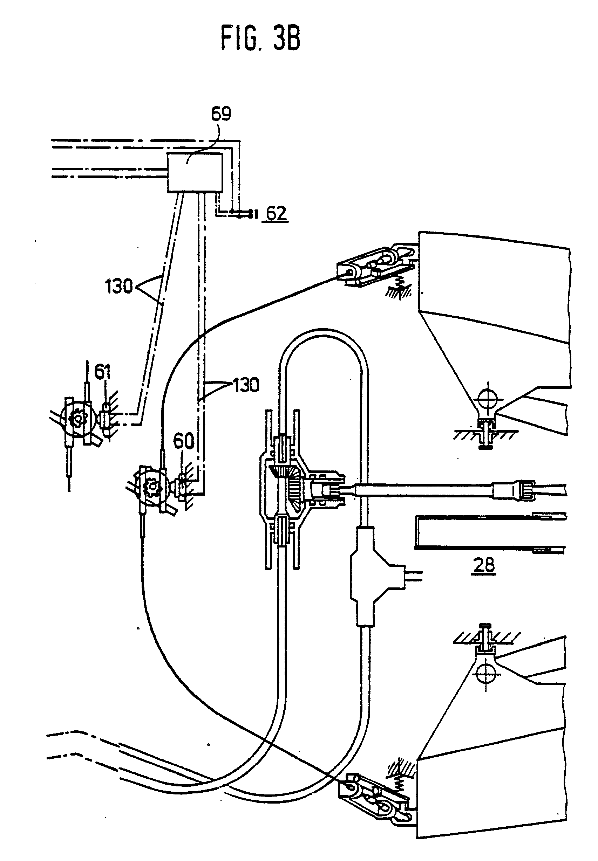

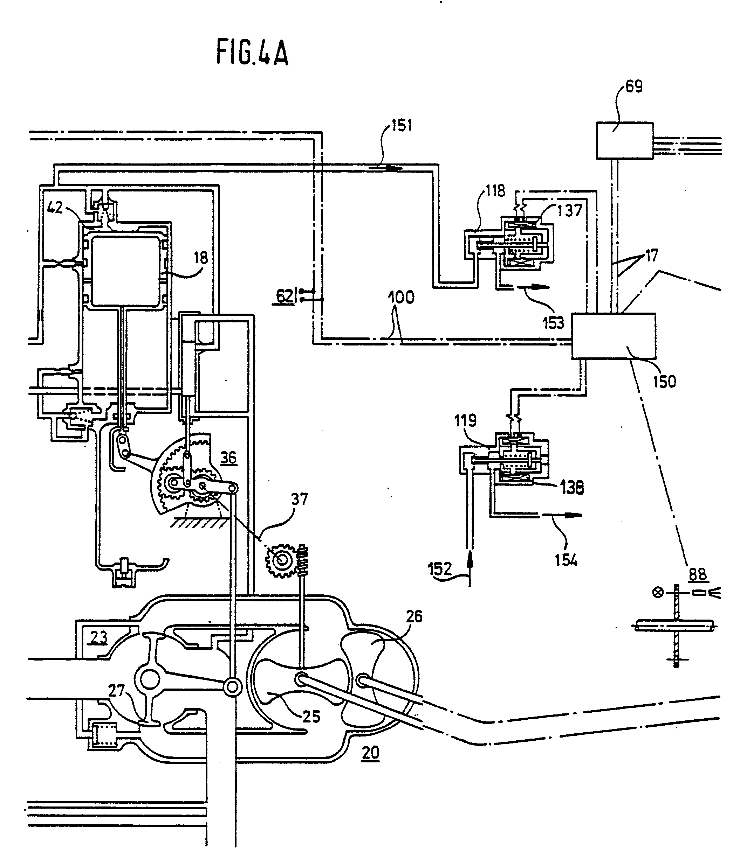

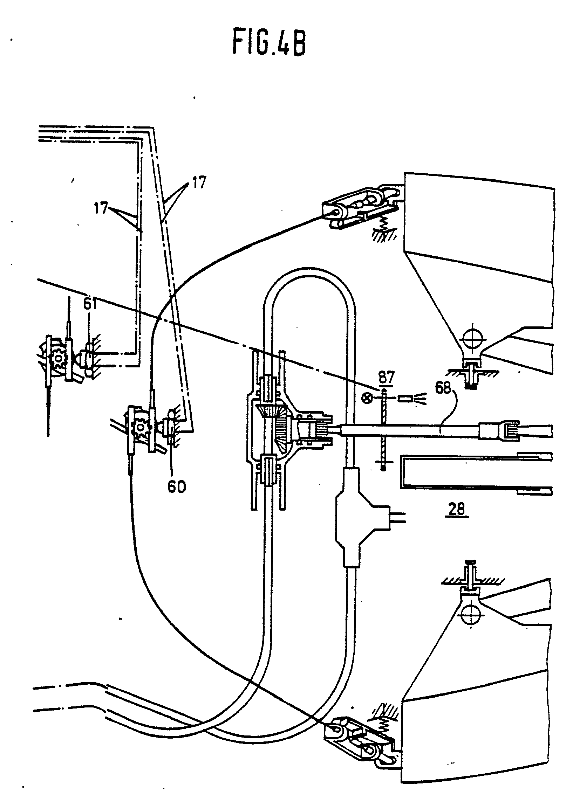

Gemäß Fig. 1 bis 6 weist die Verstelleinrichtung zwei gleiche Sollwertgeber zur Betätigung der Drehschieberventile 23 auf. Gemäß Fig. 1 und 3 bis 6 sind diese Sollwertgeber zwei Eingangskolben (Sollwertkolben oder Zeitvorgabekolben) 18 und 19. Der Eingangskolben 19 ist in Fig. 3 und 4 der Einfachheit halber nicht dargestellt. Der Drehschieber 27 wird durch den zugehörigen, in einem Zylinder 35 durch Druckluftbeaufschlagung verschiebbaren bzw. steuerbaren Eingangskolben 18 bzw. 19 bzw. durch dessen Kolbenstange 65 über ein Diffenrentialgetriebe 36 betätigt, das vom zugehörigen Luftmotor 20 über eine ein untersetzendes Rückführgetriebe (Schneckengetriebe) 39 aufweisende Rückkopplung 37 bzw. 66 beeinflußbar ist. Wird der Eingangskolben 18 bzw. 19 in seiner dargestellten, oberen Stellung oben druckluftbeaufschlagt, so wird er nach unten bewegt, und die Klappen 24 werden ausgefahren. Der Luftmotor 20, das Drehschieberventil 23 und das Differentialgetriebe 36 zusammen wirken als Folgeeinrichtung, die der Bewegung des Eingangskolbens 18 bzw. 19 nachläuft. Es handelt sich um einen Stellungsregler. Die Stellung eines Hebels 48 am Differentialgetriebe 36 ist ein Maß für die Regelabweichung. Durch eine Schieberventil 49 wird ein Anwachsen der Regelabweichung über ein unzulässiges Maß hinaus verhindert. Zur Steuerung der Eingangskolben 18 und 19 durch die Druckluft dienen jeweils das genannte nicht dargestellte Folgeventil (Schieberventil), zwei an den Enden des Zylinders 35 vorgesehene Rückschlagventile 44 und 45 zum Einlassen der Druckluft in den jeweiligen Hochdruckraum 42 des Zylinders 35 und zwei an und vier vor diesen Enden vorgesehene Drosselöffnungen 46, 47 und 38, 40 des Zylinders 35. Vom Folgeventil führt eine Luftleitung 59 zu den Drosselöffnungen 38 und 46 und zum Rückschlagventil 44 und eine Luftleitung 22 zu den Drosselöffnungen 40 und 47 und zum Rückschlagventil 45. Die gewünschte Eingangskolben-Bewegungsrichtung zum Aus- oder Einfahren des Schubumkehrers wird je Eingangskolben 18 bzw. 19 durch entsprechende Einstellung des zugehörigen genannten nicht dargestellten Richtungswählventils mittels Druckluft über das Folgeventil erzielt.

Gemäß Fig. 1 weist die Verstelleinrichtung eine Synchronisationseinrichtung für das Ausfahren der beiden Schubumkehrer bzw. Klappenpaare (24) auf, bei der die Stellwege der beiden Eingangskolben 18 und 19 gemessen werden, und zwar durch zwei gleiche induktive Drehaufnehmer 10 und 11 der Synchronisationseinrichtung, und es erfolgt das Synchronisieren durch Entlüften am voreilenden Eingangskolben 18 bzw. 19. Die Drehaufnehmer 10 und 11 werden durch Ritzel zweier gleicher Zahnstangengetriebe 15 und 16 betätigt, deren Zahnstangen in Verlängerung der Kolbenstangen 65 vorgesehen sind. Die Synchronisationseinrichtung weist ferner eine elektrische Fehlereinheit 12 auf, mit der die Drehaufnehmer 10 und 11 und zwei gleiche, elektrische Entlüftungsventile 13 und 14 über elektrische Leitungen 51 bis 54 verbunden sind. Die Entlüftungsventile 13 und 14 sind durch Elektromagnete 70 und 71 zum Luftdurchlaß und -absperren elektrisch schaltbar. Die Fehlereinheit 12 vergleicht die Stellwegmeßwerte der Drehaufnehmer 10 und 11 miteinander. Jedes Entlüftungsventil 13 und 14 steht über je eine Entlüftungsleitung 55 bzw. 56 mit der Luftleitung 59 an einer Stelle zwischen einer Drosselstelle 57 der Luftleitung 59 und der Drosselöffnung 46 in Verbindung. Sind die genannten Stellwege und somit die Stellwegmeßwerte voneinander verschieden, so wird von der Fehlereinheit 12 durch Steuerimpulse das zum voreilenden Eingangskolben 18 und 19 gehörige Entlüftungsventil 13 bzw. 14 solange geöffnet, bis der Hochdruckraum 42 über die Drosselöffnung 46, die Druckluftleintung 59 und die Entlüftungsleitung 55 bzw. 56 so weit entlüftet ist — siehe die Ventilabströmpfeile 50 und 43 —, daß praktisch synchrone Ausfahrbewegungen der beiden Eingangskolben 18 und 19 und somit der beiden Schubumkehrer erzielt werden.

Es ist ein von Verriegelungsschaltern 60 und 61 für die zwei Klappenpaare (24) ausgehender, elektrischer Zeitverzögerungskreis 17 vorgesehen, der ein Signal zum Aufheben der Synchronisationsverbindung über eine Schalteinrichtung 69 zur Fehlereinheit 12 gibt, wenn eines der beiden Düsentriebwerke oder Schubumkehr-Systeme gestört ist oder versagt. Wenn aufgrund einer solchen Störung oder dgl. der zugehörige Verriegelungsschalter 60 bzw. 61 eine kleine Zeitspanne, z. B. 0,1 sec, lang nach dem Einstellen der beiden Richtungswählventile auf « Ausfahren » in Verriegelungsstellung bleibt, werden über die Schalteinrichtung 69, die auf diese Zeitspanne eingestellt ist, erstens durch die Fehlereinheit 12 die Entlüftungsventile 13 und 14 geschlossen und zweitens die Richtungswählventile auf « Einfahren » umgeschaltet. Will man dann den zum nicht fehlerhaften Triebwerk bzw. System gehörigen Schubumkehrer allein ausfahren, werden, durch Einschalten eines Handschalters 62 durch den Piloten, die beiden Richtungswählventile auf « Ausfahren » umgeschaltet. Dabei bleibt die Synchronisationsverbindung aufgehoben, weil die elektrische Fehlereinheit 12 bzw. — siehe die anderen Figuren — 86, 150, 162 oder 170 so programmiert ist. Der Schalter 62 liegt in einem elektrischen Leitungssystem 100 zwischen dieser Fehlereinheit bzw. der Schalteinrichtung 69 und den Richtungswählventilen.

Gemäß Fig. 2 sind anstelle der Eingangskolben 18 und 19 zwei gleiche, elektronisch gesteuerte Elektromotoren 80 und 81 vorgesehen. Da keine Eingangskolben (18, 19) existieren, gibt es übrigens keine Luftleitungen zwischen dem Folgeventil und den Eingangskolben (18, 19). Der Drehwinkel bzw. die Anzahl der Umdrehungen des Läufers des Elektromotors 80 bzw. 81 bzw. der Hub s einer durch diesen Läufer verschiebbaren Mutter 90 (anstelle der Kolbenstange 65) bzw. 94 in Abhängigkeit von der Zeit t, also das Drehwinkel-Zeit-Verhalten der E-Motoren 80 und 81 bzw. das Hub-Zeit-Verhalten der Muttern 90 und 94, wird durch eine elektronische Steuereinheit 89 gemäß einer Kurve 92 für das Ausfahren und gemäß einer Kurve 93 für das Einfahren der Klappen 24 gesteuert. Der Drehschieber 27 wird hier durch den Elektromotor 80 bzw. 81 bzw. die Mutter 90 bzw. 94 über das Differentialgetriebe 36 betätigt, das auch hier vom Luftmotor 20 über die Rückkopplung 37 bzw. 66 beeinflußbar ist. Die Mutter 90 bzw. 94 sitzt auf einer Gewindespindel 91, die vom Läufer des Elektromotors 80 bzw. 81 über ein um 90° umlenkendes Kegelradpaar 98 um ihre ideelle Achse gedreht wird, wobei die Mutter 90 bzw. 94 axial bewegt wird ; wird sie aus ihrer dargestellten, oberen Stellung, bei der die Klappen 24 eingefahren sind, nach unten bewegt, dann werden dadurch die Klappen 24 ausgefahren. — Die gewünschte Bewegungsrichtung (Ausfahren oder Einfahren) der beiden Schubumkehrer wird durch den Piloten gewählt, und zwar durch entsprechendes Einstellen der beiden Richtungswählventile, wodurch u. a. dann über das elektrische Leitungssystem 100, die Fehlereinheit 86 und die Steuereinheit 89 die Elektromotoren 80 und 81 eingeschaltet werden. — Anstelle der beiden Schieberventile 49 sind zwei Drehmomentbegrenzer 84 und 85 für die beiden Elektromotoren 80 und 81 vorgesehen.

Zum Synchronisieren werden die Elektromotoren 80 und 81 benutzt. Durch die Mutter 90 bzw. 94 wird nicht nur der jeweils zugehörige Drehschieber 27 betätigt, sondern auch ein jeweils zugehöriger, induktiver Stellungsrückmelder 82 bzw. 83. Die Stellungsrückmelder 82 und 83 sind Teile der Synchronisationseinrichtung und geben ihre Stellwegmeßwerte in die Steuereinheit 89 ein, in der diese miteinander verglichen werden und die bei Ungleichheit derselben dem voreilenden Elektromotor 80 bzw. 81 Steuerimpulse in dem Sinn übermittelt, daß dieser langsamer wird, und zwar gleich schnell wie der andere Elektromotor 81 bzw. 80, so daß die Muttern 90 und 94 und somit die beiden Schubumkehrer praktisch synchron bewegt bzw. ausgefahren werden. In diesem Sinn gehört die Steuereinheit 89 zum Teil der Synchronisationseinrichtung an.

Zusätzlich weist gemäß Fig. 2 die Synchronisationseinrichtung zwei optisch-elektrische Vorrichtungen 87 und 88 zum Zählen der Umdrehungen der beiden Luftmotoren 20 auf, weil im allgemeinen bei den beiden Luftmotoren 20 voneinander verschiedene Wirkungsgrade und Reibungen und an den nachfolgenden Übertragungsteilen voneinander verschiedene Reibungen auftreten. Die Zählvorrichtung 87 bzw. 88 weist eine auf einer Welle 68 der Übertragungseinrichtung 28 feste Scheibe 95 mit einem koaxialen Kranz Bohrungen 96, eine Lampe 99 auf der einen Seite dieses Kranzes und eine Impulssonde 97 auf der anderen Seite dieses Kranzes auf. Die Zählvorrichtungen 87 und 88 bzw. deren Impulssonden 97 messen die Stellungen der beiden Schubumkehrer bzw. die Anzahl der Umdrehungen der Drehkörper 25, 26 bzw. der Wellen 68. Die betreffenden Umdrehungsmeßwerte werden in der Fehlereinheit 86 miteinander verglichen, und in der Steuereinheit 89 sind die genannten Stellwegmeßwerte durch unterschiedliche Umdrehungsmeßwerte korrigierbar, so daß die Synchronisation noch besser wird.

Auch hier sind der elektrische Zeitverzögerungskreis 17, die Schalteinrichtung 69 usw. vorgesehen, zum Aufheben der Synchronisationsverbindung im Fall einer genannten Störung oder dgl. Durch die Fehlereinheit 86 wird dann über die Steuereinheit 89 die Synchronisationsverbindung aufgehoben und die Drehrichtung der Elektromotoren 80 und 81 geändert, zum Einfahren der beiden Schubumkehrer.

Gemäß Fig. 3 werden die Stellwege an den Ausgängen der Verstelleinrichtung gemessen. Die Synchronisationseinrichtung weist ein me-chanisches Differential 113 auf, das die Differenz zwischen den beiden Schubumkehrer-Stellungen mißt, indem es die Differenz der Umdrehungen der beiden Luftmotoren 20 mißt, und das dafür sorgt, daß der Hochdruckraum 42 am schnelleren Eingangskolben 18 bzw. 19 entlüftet wird. Auf zwei gleichen Handkurbeleinrichtungen 110 für die Drehkörper 26 sind zwei um 90° Umlenkende Kegelradpaare 111 und 112 vorgesehen. Die Drehkörper 26 treiben über die Handkurbeleinrichtungen 110, die Kegelradpaare 111 und 112 und zwei anschließende, biegsame Wellen 116 und 117 zwei zueinander parallele, axial feststehende Gewindespindeln 120 und 121 des Differentials 113 an. Dabei werden im Fall des Ausfahrens der Klappen 24 auf den Gewindespindeln 120 und 121 befindliche Muttern 122 und 123 in Fig. 3 nach unten bewegt. Das Differential 113 weist nämlich Stangen 124 und 125 auf, die einerseits an den Muttern 122 und 123 und andererseits an einer zwischen den Gewindespindeln 120 und 121 oberhalb der Muttern 122, 123 liegenden Muffe 131 des Differentials 113 angelenkt sind und also eine Kniegelenkbrücke darstellen, die die Muttern 122 und 123 bezüglich Drehung festlegt und aber auch unterschiedliche Wege der Muttern 122 und 123 zuläßt. Die Muffe 131 am Knie der Kniegelenkbrücke 124, 125 befindet sich längsverschiebbar auf einem länglichen Schwenkhebel 128 des Differentials 113, der sich zwischen den Gewindespindeln 120 und 121 in seiner Normalstellung parallel zu diesen erstreckt und um eine feststehende Achse 129, die unterhalb der Muttern 122, 123 liegt, zu den Gewindespindeln 120 und 121 hin schwenkbar gelagert ist.

Eilt ein Eingangskolben 18 bzw. 19 und somit Schubumkehrer dem anderen voraus, so bewirkt die entsprechend vorgeeilte Mutter 122 bzw. 123 ein Schwenken des Schwenkhebels 128 zu dieser hin und ein Öffnen eines Auslaßventils 114 bzw. 115 des Differentials 113 durch das oberhalb der Muttern 122 und 123 liegende Schwenkende 132 des Schwenkhebels 128, wodurch der Hochdruckraum 42 am vorgeeilten Eingangskolben 18 bzw. 19 entlüftet und die Bewegung des vorgeeilten Schubumkehrers bis praktisch zum Synchronausfahren der beiden Schubumkehrer verzögert wird. Der Entlüftungsstrom ist durch die Pfeile 133 und 134 angedeutet. Beim gesamten Ausfahrvorgang der Schubumkehrer, also auch bei einem solchen Entlüften, sind zwei gleiche, elektromagnetisch gesteuerte Entlüftungsventile 118 und 119 geöffnet, die in Leitungen 126 und 127, welche von den Hochdruckräumen 42 zu den Auslaßventilen 114 und 115 führen, vorgesehen sind. Die Entlüftungsventile 118 und 119 sind beim Beginn des Ausfahrens der Schubumkehrer durch Unterstromsetzen von Elektromagneten 137 und 138 der Entlüftungsventile 118 und 119 geöffnet worden.

Wenn ein Triebwerk oder dgl. versagt, werden zum Aufheben der Synchronisationsverbindung beide Entlüftungsventile 118 und 119 durch ihre Elektromagnete 137 und 138 geschlossen; das

Signal dazu gibt ein elektrischer Zeitverzögerungskreis 130 von den Verriegelungsschaltern 60 und 61 her über die Schalteinrichtung 69.

Der Schwenkhebel 128 weist zwischen der Muffe 131 und seinem Schwenkende 132 eine Übersteuerungs- bzw. Überweg- bzw. Überlastsicherung 139 auf, die bei einer zu großen Differenz zwischen den Stellungen der Muttern 122 und 123, also einem zu großen Schwenkwinkel des Schwenkhebels 128, hervorgerufen im allgemeinen durch Versagen eines der beiden Düsentriebwerke oder Schubumkehr-Systeme, das Schwenkende 132 elastisch zurückhält, so daß das Differential 113 nicht beschädigt wird.

Auch gemäß Fig. 4 werden die Stellwege an den Ausgängen der Verstelleinrichtung gemessen. Die Synchronisationseinrichtung weist zwei optisch-elektrische Vorrichtungen 87 und 88 zum Zählen der Umdrehungen der beiden Luftmotoren 20 auf. Die Zählvorrichtungen 87 und 88 decken sich in Art und Anbringung mit denen gemäß Fig. 2. Es wird die Differenz in der Anzahl der Umdrehungen der beiden Luftmotoren 20 bzw. der Drehkörper 25, 26 derselben bzw. der Wellen 68 durch die Zählvorrichtungen 87 und 88 gemessen und durch eine elektrische Fehlereinheit 150 in elektrische Signale umgewandelt. Es sind die elektrischen Entlüftungsventile 118 und 119 für die Entlüftung der Hochdruckräume 42 der Eingangskolben 18 und 19 vorgesehen, und es empfängt das Entlüftungsventil 118 bzw. 119 für den schnelleren Eingangskolben 18 bzw. 19 die Signale, um den zugehörigen Hochdruckraum 42 zu entlüften — siehe den Ventilzuströmpfeil 151 bzw. 152 und den Ventilabströmpfeil 153 bzw. 154 —, bis die Klappen 24 der beiden Schubumkehrer praktisch synchron ausfahren.

Wenn ein Triebwerk oder dgl. versagt, werden die beiden Entlüftungsventile 118 und 119 durch ihre Elektromagnete 137 und 138 geschlossen. Dazu dienen wiederum die Verriegelungsschalter 60 und 61, der elektrische Zeitverzögerungskreis 17 und ferner die elektrische Fehlereinheit 150.

Gemäß Fig. 5 handelt es sich, verglichen mit Fig. 4, um eine Alternativlösung, indem anstelle der beiden optisch-elektrischen Zählvorrichtungen 87 und 88 induktive Drehaufnehmer 160 und 161 vorgesehen sind. Diese sind jeweils an dem vom Luftmotor 20 bzw. dessen Drehkörper 25 (26) angetriebenen, untersetzenden Rückführgetriebe (Schneckengetriebe) 39 vorgesehen, und zwar auf der Welle des Schneckenrads desselben. Es wird die Differenz in der Anzahl der Umdrehungen der beiden Luftmotoren 20 bzw. der Drehkörper 25 (26) derselben bzw. der eben genannten Schneckenradwellen durch die Drehaufnehmer 160 und 161 gemessen. Alles andere verhält sich so, wie zu Fig. 4 angegeben ist. Die elektrische Fehlereinheit ist mit 162 bezeichnet. Es sind die Entlüftungsventile 13 und 14 vorgesehen.

Gemäß Fig. 6 werden die Stellwege an den Eingangskolben 18 und 19 durch die induktiven Drehaufnehmer 10 und 11 und an den Ausgängen der Verstelleinrichtung durch die induktiven Drehaufnehmer 160 und 161 gemessen, und das Synchronisieren wird durch Entlüften der Eingangskolben 18 und 19 erzielt. Im einzelnen wird folgendermaßen vorgegangen : Es wird der Unterschied zwischen den Hüben der beiden Eingangskolben 18 und 19 durch die beiden induktiven Drehaufnehmer 10 und 11 gemessen, die wie gemäß Fig. 1 von den Kolbenstangen 65 der Eingangskolben 18 und 19 bzw. den Zahnstangengetrieben 15 und 16 betätigt werden. Die Stellwegmeßwerte werden in eine elektrische Fehlereinheit 170 eingegeben. Die Werte der betreffenden Fehlersignale werden durch einen Funktionsgenerator 171 abgeändert, der mit Signalen der wie gemäß Fig. 5 von den Luftmotoren 20 angetriebenen Drehaufnehmer 160 und 161 beliefert wird. Das Synchronisieren des Klappenausfahrens wird von der elektrischen Fehlereinheit 170 her durch Entlüften am schnelleren Eingangskolben 18 bzw. 19 über das Entlüftungsventil 13 bzw. 14 erzielt, was also von den Signalen der Eingänge und Ausgänge der Verstelleinrichtung abhängt. Auch hier ist der elektrische Zeitverzögerungskreis 17 vorgesehen, für den genannten Zweck.

Die genannte bauliche Einheit 20, 23, 32, 33 ist in Fig. 2, 5 und 6 der Einfachheit halber nur im Umriß dargestellt ; ihr Inneres deckt sich völlig mit dem Inneren der baulichen Einheit 20, 23, 32, 33 in Fig. 1, 3 und 4.

## Patentansprüche

1. Einrichtung zum Verstellen, d. h. Ein- und Ausfahren zweier Schubumkehrer für zwei Düsentriebwerke eines Flugzeugs, mit jeweils einem durch Druckluft betriebenen Stellmotor, besonders Drehkolbenmotor, jeweils einem Ventil, vorzugsweise Drehschieberventil, zur Steuerung der Druckluft und jeweils einem Sollwertgeber (Eingang) — insbesondere durch Druckluftbeaufschlagung steuerbaren Sollwertkolben (Eingangskolben) —, durch den das Ventil über ein Differentialgetriebe betätigt wird, das vom Stellmotor über eine ein Rückführgetriebe aufweisende Rückkopplung beeinflußbar ist, dadurch gekennzeichnet, daß die Verstelleinrichtung eine Synchronisationseinrichtung für das Ausfahren der beiden Schubumkehrer (Klappen (24)) aufweist, bei der in Abhängigkeit von unterschiedlichen Stellwegen, die an den beiden Sollwertgebern (Eingangskolben (18, 19)) und/oder den beiden Ausgängen der Verstelleinrichtung gemessen werden, eine synchronisierende Beeinflussung der Stellung mindestens eines der beiden Sollwertgeber (18, 19) vorgenommen wird.

2. Einrichtung nach Anspruch 1, dadurch gekennzeichnet, daß die Synchronisationseinrichtung zwei jeweils durch einen der beiden Eingangskolben (18, 19)· betätigte Wegaufnehmer (10, 11) und eine elektrische Fehlereinheit (12) zum Vergleich der Stellwegmeßwerte und zur Abgabe von Steuerimpulsen für die genannte synchronisierende Beeinflussung aufweist.

3. Einrichtung nach Anspruch 1, dadurch gekennzeichnet, daß unter Verwendung zweier durch eine elektronische Steuereinheit (89) gesteuerter Elektromotoren (80, 81) also Sollwertgeber die Synchronisationseinrichtung zwei jeweils durch einen der Elektromotoren (80, 81) betätigte Stellungsrückmelder (82, 83) aufweist und ihr die elektronische Steuereinheit (89) zum Teil angehört, und zwar zum Vergleich der Stellwegmeßwerte und zur Abgabe von Steuerimpulsen für die genannte synchronisierende Beeinflussung.

4. Einrichtung nach Anspruch 3, dadurch gekennzeichnet, daß die Synchronisationseinrichtung zusätzlich je Ausgang der Verstelleinrichtung eine Vorrichtung (87, 88) zum Zählen der Umdrehungen des betreffenden Stellmotors (20) bzw. einer von ihm getriebenen Welle (68) und eine elektrische Fehlereinheit (86) zum Vergleich der Umdrehungsmeßwerte aufweist, wobei in der elektronischen Steuereinheit (89) die Stellwegmeßwerte durch unterschiedliche Umdrehungsmeßwerte korrigierbar sind.

5. Einrichtung nach Anspruch 1, dadurch gekennzeichnet, daß die Synchronisationseinrichtung ein mechanisches Differential (113) mit zwei jeweils durch einen der beiden Stellmotoren (20) betätigten, mechanischen Wegaufnehmern (120 bis 125) und einer mechanischen Vorrichtung (124, 125, 128, 131) zur Umwandlung unterschiedlicher Stellwege der Wegaufnehmer (Muttern (122, 123)) in Steuerbewegungen zur genannten synchronisierenden Beeinflussung aufweist.

6. Einrichtung nach Anspruch 1, dadurch gekennzeichnet, daß die Synchronisationseinrichtung je Ausgang der Verstelleinrichtung eine Vorrichtung (87, 88) zum Zählen der Umdrehungen des betreffenden Stellmotors (20) bzw. einer von ihm getriebenen Welle (68) und eine elektrische Fehlereinheit (15) zum Vergleich der Umdrehungsmeßwerte und zur Abgabe von Steuerimpulsen für die genannte synchronisierende Beeinflussung aufweist.

7. Einrichtung nach Anspruch 1, dadurch gekennzeichnet, daß die Synchronisationseinrichtung je Ausgang der Verstelleinrichtung einen durch den betreffenden Stellmotor (20) betätigten Wegaufnehmer (160, 161) und eine elektrische Fehlereinheit (162) zum Vergleich der Stellwegmeßwerte und zur Abgabe von Steuerimpulsen für die genannte synchronisierende Beeinflussung aufweist.

8. Einrichtung nach Anspruch 1, gekennzeichnet durch eine genannte Synchronisationseinrichtung mit zwei jeweils durch einen der beiden Eingangskolben (18, 19) betätigten Wegaufnehmern (10, 11) und einer elektrischen Fehlereinheit (170) zum Vergleich der Stellwegmeßwerte und zur Abgabe von Steuerimpulsen für die genannte synchronisierende Beeinflussung und zusätzlich mit zwei jeweils durch einen der beiden Stellmotoren (20) betätigten Wegaufnehmern (160, 161) und einem Funktionsgenerator (171), durch den die genannten Stellwegmeßwerte mittels der Stellwegmeßwerte

der letztgenannten Wegaufnehmer (160, 161) korrigierbar sind.

9. Einrichtung nach Anspruch 2, 5, 6, 7 oder 8, dadurch gekennzeichnet, daß die Synchronisationseinrichtung zwei jeweils für einen der beiden Eingangskolben (18, 19) vorgesehene, durch die genannten Steuerimpulse bzw. -bewegungen betätigte Steuerventile (3, 14 ; 114, 115 ; 118, 119) zur Änderung des Drucks auf mindestens einer der Eingangskolbenseiten aufweist.

10. Einrichtung nach Anspruch 5, dadurch gekennzeichnet, dass das mechanische Differential (113) zwei durch die Stellmotoren (20) getriebene Gewindespindeln (120, 121), die spindelaxial feststehen und zueinander parallel angeordnet sind, aufweist und zwei Muttern (122, 123) darauf, die miteinander durch eine sie (122, 123) bezüglich Drehung festlegende, unterschiedliche Mutternwege zulassende Kniegelenkbrücke (124, 125) verbunden sind, mit einer Muffe (131) am Knie und einem durch sie (131) führenden Schwenkhebel (128) längs zwischen den Gewindespindeln (120, 121), der seine Schwenkachse (129) auf der einen und sein Schwenkende (132) auf der anderen Axialseite der Muffe (131) aufweist, wobei die zwei im kennzeichnenden Teil des Anspruch 9 genannten Steuerventile (114, 115) zu beiden Querseiten vom Schwenkende (132) betätigbar sind.

11. Einrichtung nach Anspruch 2, 7 oder 8 dadurch gekennzeichnet, daß ein genannter Wegaufnehmer ein induktiver Drehaufnehmer (10, 11 ; 160, 161) ist.

12. Einrichtung nach Anspruch 2, 8 oder 11, dadurch gekennzeichnet, daß der Wegaufnehmer als Drehaufnehmer (10, 11) durch den Eingangskolben (18, 19) über ein Zahnstangengetriebe (15, 16) betätigt wird, das die Axialbewegung der Kolbenstange (65) des Eingangskolbens (18, 19) in eine Drehbewegung umwandelt.

13. Einrichtung nach Anspruch 7 oder 8, dadurch gekennzeichnet, daß der Wegaufnehmer (160, 161) durch den Stellmotor (20) über das Rückführgetriebe (39) betätigt wird.

14. Einrichtung nach Anspruch 4 oder 6, dadurch gekennzeichnet, daß die Zählvorrichtung eine optischelektrische Zählvorrichtung (87, 88) mit einer auf der Welle (68) festen Zählscheibe (95) ist.

**Claims**

1. Arrangement for displacing, i. e. retracting and extending two thurst reversers for two jet propulsion units of an aircraft, with in each case a compressed air operated positioning motor, particularly a rotary piston motor, in each case a valve, preferably a rotary gate valve, for controlling the compressed air and with in each case a desired value transmitter (input) — in particular a compressed air controllable desired value piston (input piston) — by which the valve is actuated through a differential transmission adapted to be influenced by the positioning motor through a feedback system incorporating a feedback transmission, characterised in that the displacing arrangement comprises a synchronising means for extending the two thrust reversers (flaps 24), whereby as a function of different adjustment movements measured at the two desired value transmitters (input pistons 18, 19) and/or the two outputs of the displacing arrangement, a synchronising influence is exercised to adjust the position of at least one of the two desired value transmitters (18, 19).

2. Arrangement according to Claim 1, characterised in that the synchronising means comprise, in each case actuated by one of the two input pistons (18, 19), two travel recorders (10, 11) and an electrical error unit (12) for comparing the measured values of the adjustment travel and for emitting control pulses for the aforesaid synchronising influence to be exercised.

3. Arrangement according to Claim 1, characterised in that while using, controlled by an electronic control unit (89), two electric motors (80, 81) as the desired value transmitters, the synchronising means comprises two position repeaters (82, 83) actuated by in each case one of the electric motors (80, 81), and including in part the electronic control unit (89), in fact for comparing the measured values of the adjustment travel and for emitting control pulses for the said synchronising influence to be exercised.

4. Arrangement according to Claim 3, characterised in that the synchronising means additionally comprise, for each output of the displacing means, a device (87, 88) for counting the revolutions of the relevant positioning motor (20) or of a shaft (68) driven by it and an electrical error unit (86) for comparing the measured values of the revolutions, the measured values for adjustment travel being adapted to be corrected in the electronic control unit (89) by different measured values for revolutions.

5. Arrangement according to Claim 1, characterised in that the synchronising means comprise a mechanical differential (113) having, in each case actuated by one of the two positioning motors (20), two mechanical travel recorders (120 to 125) and a mechanical device (124, 125, 128, 131) for converting different amounts of travel recorded by the travel recorders (nuts (122, 123)) into control movements for exercising the said synchronising influence.

6. Arrangement according to Claim 1, characterised in that for each output of the displacement arrangement, the synchronising means comprise a device (87, 88) for counting the revolutions of the relevant positioning motor (20) or of a shaft (68) driven by it and an electrical error unit (15) for comparing the revolution readings and for emitting control pulses for exercising the said synchronising influence.

7. Arrangement according to Claim 1, characterised in that for each output of the displacement means, the synchronising means comprise a travel recorder (160, 161) actuated by the relevant positioning motor (20) and an electrical error unit (162) for comparing the displacement travel readings and for emitting control pulses so that the aforesaid synchronising influence can be exercised.

8. Arrangement according to Claim 1, characterised by a socalled synchronising means comprising two travel recorders (10, 11) actuated by in each case one of the two input pistons (18, 19), and an electrical error unit (170) for comparing the measured values of adjustment travel and for emitting control pulses for the aforesaid synchronising influence to be exercised and provided additionally with two travel recorders (160, 161) actuated in each case by one of the two positioning motors (20) and a function generator (171) by which the said measured values for adjustment travel can be corrected by the values for adjustment travel as measured by the last-mentioned travel recorders (160, 161).

9. Arrangement according to Claims 2, 5, 6, 7 or 8, characterised in that the synchronising means comprise, in each case intended for one of the two input pistons (18, 19) and actuated by the said control pulses or movements, two control valves (13, 14 : 114, 115 ; 118, 119) for varying the pressure on at least one of the sides of the input pistons.

10. Arrangement according to Claim 5, characterised in that the mechanical differential (113) comprises, driven by the positioning motors (20), two threaded spindles (120, 121) disposed in a spindlewise axially fixed and mutually parallel arrangement, and two nuts (122, 123) thereon which are coupled to each other by a knee joint bridge (125, 125) which fixes them in terms of rotation but permits of different movements of the nuts, with a sleeve (131) on the knee and with a pivot lever (128) leading through it (131) between the threaded spindles (120, 121), with its pivot axis (129) at one axial end and its pivot end (132) at the other axial end of the sleeve (131), the two control valves (114, 115) mentioned in the characterising part of Claim 9 being capable of being actuated on both transverse sides by the pivot end (132).

11. Arrangement according to Claim 2, 7 or 8, characterised in that a said travel recorder is an inductive rotation recorder (10, 11 ; 160, 161).

12. Arrangement according to Claim 2, 8 or 11, characterised in that the travel recorder, when it is a rotation recorder (10, 11), is actuated by the input piston (18, 19) through a rack transmission (15, 16) which converts the axial movement of the piston rod (65) of the input piston (18, 19) into a rotary movement.

13. Arrangement according to Claim 7 or 8, characterised in that the travel recorder (160, 161) is actuated by the positioning motor (20) through the feedback transmission (39).

14. Arrangement according to Claim 4 or 6, characterised in that the counting device is an optical-electrical counting device (87, 88) with a counting disc (95) fixed on the shaft (68).

**Revendications**

1. Installation pour régler, c'est-à-dire pour sortir et rentrer, deux inverseurs de poussée pour deux moteurs à réaction d'un avion comportant chaque fois un moteur de réglage à air comprimé notamment un moteur à piston rotatif, chaque fois une vanne, de préférence une vanne à tiroir rotatif, pour commander l'air comprimé et chaque fois un générateur de grandeur de consigne (entrée), notamment en appliquant l'air comprimé à des pistons de valeur de consigne, susceptible d'être commandés (pistons d'entrée), qui met en œuvre la vanne par l'intermédiaire d'une transmission différentielle, susceptible d'être influencée à partir du moteur de réglage par l'intermédiaire d'une transmission de retour présentant un degré de réaction, caractérisée en ce que l'installation de commande comporte une installation de synchronisation pour faire sortir les deux inverseurs de poussée (volets 24), et pour laquelle, en fonction des courses de réglage différentes mesurées sur les deux générateurs de valeur de consigne (pistons d'entrée 18, 19) et/ou les deux sorties de l'installation de réglage, la position d'au moins l'un des deux générateurs de valeur de consigne (18, 19) est influencée de façon à synchroniser.

2. Installation selon la revendication 1, caractérisée en ce que l'installation de synchronisation comporte chaque fois deux capteurs de course (10, 11) mis en œuvre par l'un des deux pistons d'entrée (18, 19) et une unité d'erreur (12) électrique pour comparer les grandeurs de course de réglage et pour fournir des impulsions de commande pour assurer la synchronisation.

3. Installation selon la revendication 1, caractérisée en ce qu'en utilisant deux moteurs électriques (80, 81) commandés par une unité de commande électronique (89), comme générateurs de grandeur de consigne, l'installation de synchronisation comporte deux dispositifs de signalisation de retour de position (82, 83) actionnés respectivement par l'un des moteurs électriques (80, 81), dispositifs de signalisation auxquels appartient en partie l'unité de commande électronique (89) pour comparer les grandeurs de mesure de la course de réglage et pour fournir des impulsions de commande pour assurer la synchronisation.

4. Installation selon la revendication 3, caractérisée en ce que l'installation de synchronisation comporte, en outre, par sortie de l'installation de réglage, chaque fois un dispositif (87, 88) pour compter les rotations du moteur de réglage correspondant (20) ou un axe (68) entraîné par celui-ci et une unité d'erreur, électrique (86) pour comparer les grandeurs de mesure de rotation, les grandeurs de mesure de course de réglage dans l'unité de commande électronique (89) étant susceptibles d'être corrigées par des grandeurs de mesure de rotation différentes.

5. Installation selon la revendication 1, caractérisée en ce que l'installation de synchronisation comporte un différentiel mécanique (113) ayant deux capteurs de course (120-125), mécaniques, actionnés chaque fois par l'un des deux moteurs de réglage (120) et un dispositif mécanique (124, 125, 128, 131) pour convertir des courses de réglage différentes des capteurs de course (écrous 122, 123) ayant des mouvements de commande pour assurer la synchronisation.

6. Installation selon la revendication 1, caractérisée en ce que l'installation de synchronisation comporte, pour chaque sortie de l'installation de commande, un dispositif (87, 88) pour compter les rotations des moteurs de réglage correspondants (20) ou d'un axe (68) entraîné par ceux-ci et une unité d'erreur électrique (15) pour comparer les grandeurs de mesure de rotation et fournir des impulsions de commande pour assurer la synchronisation.

7. Installation selon la revendication 1, caractérisée en ce que l'installation de synchronisation comporte, pour chaque sortie, une installation de réglage, un capteur de course (160, 161) actionné par le moteur de réglage (20) correspondant et une unité d'erreur (162), électrique pour comparer les grandeurs de mesure de course de réglage et pour fournir les impulsions de commande assurant la synchronisation.

8. Installation selon la revendication 1, caractérisée par une installation de synchronisation ayant deux capteurs de course (10, 11) mis en œuvre respectivement par l'un des deux pistons d'entrée (18, 19) et une unité d'erreur (170) électrique pour comparer les grandeurs de course de réglage et pour fournir des impulsions de commande pour assurer la synchronisation et, en outre, deux capteurs de course (160, 161) mis en œuvre respectivement par l'un des deux moteurs de réglage (20) et un générateur de fonction (171) qui corrigent les grandeurs de mesure de course de réglage mentionnées à l'aide des grandeurs de mesure de course de réglage du dernier capteur de course (160, 161).

9. Installation selon les revendications 2, 5, 6, 7 ou 8, caractérisée en ce que l'installation de synchronisation comporte deux vannes de commande (13, 14 ; 114, 115 ; 118, 119) mises en œuvre par les impulsions de commande et les mouvements mentionnés, pour chaque fois l'un des deux pistons d'entrée (18, 19), pour modifier la pression d'au moins l'un des côtés des pistons d'entrée.

10. Installation selon la revendication 5, caractérisée en ce que le différentiel mécanique (113) comporte deux broches filetées (120, 121) entraînées par les moteurs de réglage (20), broches qui sont axialement fixes et sont parallèles entre elles, et portent deux écrous (122, 123) qui sont reliés par une liaison à genouillère (124, 125) en étant fixes en rotation, et parcourant des courses différentes, avec un manchon (131) prévu à l'articulation de la liaison à genouillère et un levier oscillant (128) traversant le manchon (131), levier situé entre les broches filetées (120, 121) et dont une extrémité correspond à l'axe de pivotement (129) et l'autre extrémité pivotante étant située de l'autre côté axial du manchon (131), deux vannes de commande selon la revendication 9 (114, 115) étant mises en œuvre des deux côtés transversaux de l'extrémité pivotante (132).

11. Installation selon les revendications 2, 7 ou 8, caractérisée en ce qu'au moins un capteur de course est un capteur de rotation inductif (10, 11, 160, 161).

12. Installation selon la revendication 2, 8 ou 11, caractérisée en ce que le capteur de course est un capteur de rotation (10, 11) qui actionne le piston d'entrée (18, 19), par l'intermédiaire d'une transmission à crémaillères (15, 16) qui convertit le mouvement axial de la tige de piston (65) du piston d'entrée (18, 19) en un mouvement de rotation.

13. Installation selon la revendication 7 ou 8, caractérisée en ce que le capteur de course (160, 161) est actionné par le moteur de réglage (20) par l'intermédiaire de la transmission de retour (39).

14. Installation selon la revendication 4 ou 6, caractérisée en ce que le dispositif de comptage est un dispositif de comptage optique-électrique (87, 88) portant un disque de comptage (96) solidaire de l'axe (68).

## FIG.1A

# FIG.1B

# FIG. 2A

# FIG.2B

## FIG. 3A

## FIG. 3B

# FIG.4A

## FIG.4B

# FIG.5A

# FIG.5B

# FIG.6